Europäisches Patentamt

(19) European Patent Office

Office européen des brevets

(11) Publication number: **0 280 490**
**A1**

# (12) EUROPEAN PATENT APPLICATION

(21) Application number: **88301483.9**

(22) Date of filing: **22.02.88**

(51) Int. Cl.⁴: **A 23 K 1/18**
**A 23 K 1/14**

(30) Priority: **25.02.87 GB 8704464**
**29.10.87 GB 8725417**

(43) Date of publication of application:
**31.08.88 Bulletin 88/35**

(84) Designated Contracting States: **ES**

(71) Applicant: **R.J. SEAMAN & SONS LIMITED**
**Elmham Mill, Station Road North Elmham**
**Dereham Norfolk NR20 5HT (GB)**

(72) Inventor: **McLean, Douglas Robin**
**Cale Hill Cromer Road**
**North Walsham Norfolk NR28 0NB (GB)**

**Hood, Maurice Robert**
**6 Wells Road Egmere**
**Walsingham Norfolk NR22 6AZ (GB)**

(74) Representative: **Lloyd, Richard Paul**
**Hayes & Storr 18 Market Place**
**Fakenham, Norfolk NR21 9BH (GB)**

(54) **Animal feedstuff.**

(57) A new feedstuff for pigs under the age of five weeks comprises cereal, milk solids and animal protein such as fish meal, characterized in that at least part of the cereal is present in the form of rolled flakes of cooked cereal having flake size 1.5 mm to 5 mm, preferably 2 mm to 3 mm, with flakes of size greater than 7 mm substantially absent. The cereal is wheat, maize, oats, barley or soya beans, and the flakes form 20% to 80% of the dry weight of the feedstuff. In comparison with pellets or mash of the same ingredients in powder form, the new feedstuff alleviates a tendency to digestive upset in the young pigs and is much more palatable. The milk solids and animal protein are preferably present as separate pellets of each. The pellets containing animal protein and/or the pellets containing milk solids may also contain up to 75% by weight of the pellet of powdered cooked cereal. The amount of milk in the feedstuff fed to baby pigs may be reduced, and the amount of cereal increased, after the first three to five days from weaning,

EP 0 280 490 A1

**Description**

ANIMAL FEEDSTUFF

This invention relates to animal feedstuffs and particularly to a new feedstuff for baby pigs.

Baby pigs can be weaned at less than five weeks of age and this is now commonly done at an age of 17 to 21 days. The small pigs are kept in brooder houses at a controlled high temperature, and up to the age of five weeks their diet conventionally contains milk or milk solids.

For this purpose it is known to feed them on pellets or mash consisting of a mixture of milk solids, animal protein (such as fish meal) and ceral (usually wheat) ground to a powder. For the production of pellets, which are more widely used than mash, the mixture of ingredients must be ground to a very fine powder beforehand.

It is found that baby pigs fed in this way, particularly when fed on pellets, are prone to digestive upset. This may require control by drugs which have to be administered on veterinary prescription.

The present invention provides a feedstuff for baby pigs which alleviates the problem of digestive upset and is moreover highly palatable in comparison with the pellets or mash previously used.

According to the invention, a feedstuff for pigs under the age of five weeks comprises cereal, milk solids and animal protein, characterized in that at least part of the cereal is present in the form of rolled flakes of cooked cereal having flake size 1.5 mm to 5 mm with flakes of size greater than 7 mm substantially absent, the cereal being wheat, maize, oats, barley or soya beans, and that such flakes form 20% to 80% of the dry weight of the feedstuff. The flake size is preferably 2 mm to 3 mm.

It is believed that the desirable properties of this feedstuff are due to the presence of the flakes instead of a substantial quantity of cereal powder. It is possible that when cereal wholly in the form of powder (particularly the very fine powder in the pelleted mixture hitherto used) is fed to baby pigs, it forms dough-like masses in the digestive tract and encourages undesirable proliferation of certain intestinal bacteria such as _Escherichia coli_. The presence of cereal in the form of flakes is probably also responsible for the improved palatability of the feedstuff.

In the absence of digestive upset, cereal in powder form appears to be somewhat more effective nutritionally than in the form of flakes, but this is outweighed by the consequences of digestive upset when it occurs. A suitable balance of properties in the feedstuff may be achieved by including some cereal in powder form as well as flakes of the prescribed size. Cereal of flake size greater than 7 mm appears to be nutritionally disadvantageous in baby pigs.

The animal protein and the milk solids are preferably included as separate pellets of each. The pellets may be produced directly in the desired size, for example 2 mm, or they may be the product of breaking larger pellets into crumbs of size 0.5 to 2 mm (mostly 0.5 to 1 mm) and screening out particles of size less than 0.5 mm.

The pellets containing animal protein and/or the pellets containing milk solids may also contain up to 75% by weight of the pellet of powdered cooked cereal. Breaking coarse flakes, especially of wheat, to the required size and screening the product forms powder which may contain a considerable proportion of the energy value of the cereal, and this powder is conveniently used in the protein pellets.

Supplements such as essential amino acids, vitamins and minerals are conveniently added to the animal protein before it is pelleted.

The feedstuff may also contain up to about 5% of sugar or other taste additive and up to about 2% of oil such as soya bean oil.

As an alternative to mixing cereal flakes with pellets of milk solids, the flakes may be sprayed with sugar syrup and mixed with milk solids in powder form. Some of the milk solids may be mixed with the flakes before treatment with sugar syrup. Pellets containing animal protein are then added as a further stage.

Allowance should be made for any breakage of flakes likely to occur during mixing operations. The flakes initially introduced should therefore be of somewhat greater size than that intended in the final product.

The feedstuff should have moisture content less than 12% and be stored in a cool dry place.

A feedstuff according to the invention may be given to baby pigs from the time of weaning up to the age of five weeks. It should be introduced in small quantities to ensure freshness and to reduce wastage, and a supply of fresh clean water must be ensured. The amount of milk in the feedstuff may be reduced, and the amount of cereal increased, after the first three to five days from weaning.

The following examples illustrate the invention.

EXAMPLE 1

Wheat grains were cooked at 100°C for 20 minutes, cooled, dried and rolled into flakes. (The cooking process was alternatively carried out by "micronizing" wheat grains in known manner, i.e. exposing the grains to intense infrared for a short time.) The flakes were then passed through a corn cutter so as to break individual flakes into smaller flakes of size 2.0 mm to 3.0 mm. Finer particles were removed by passing the small flakes over a screen.

Milk pellets were made by passing dried skim-milk powder containing added fat (20%) through a 2 mm pellet die.

Protein pellets also of 2 mm die size were made from the following ingredients.

Animal protein     85.4%
Synthetic amino acids (lysine and methionine)     5.2%
Dicalcium phosphate     5.0%
Vitamins and trace elements     4.0%
Growth promoter (optional)     0.4%

The small flakes of cooked wheat were then gently mixed with milk pellets and protein pellets in the following proportions.

Small flakes of cooked wheat    47.5%
Milk pellets    40.0%
Protein pellets    12.5%

The product was fed as a "creep feed" to early-weaned pigs from weaning up to the age of five weeks. In comparison with pigs similarly fed on 2.5 mm pellets of a mixture of finely ground cooked wheat, milk powder and animal protein in similar proportions, these pigs took the feedstuff much more readily and were found to be less prone to digestive upset.

EXAMPLE 2

A feedstuff suitable for feeding to baby pigs immediately on weaning was made as described generally in Example 1 from the following components. Maize flakes of size 2.0 mm to 3.0 mm were prepared from maize grains in the same way as wheat flake but much less powder was produced in reducing the flakes to the required size.

Small flakes of cooked maize    12.5%
Small flakes of cooked wheat    12.5%
Milk pellets    37.5%
Protein pellets    32.5%
Sugar    5.0%
Soya bean oil    2.0%

The protein pellets contained the following ingredients.

Fish meal    26.1%
Cooked wheat powder    68.0%
Dicalcium phosphate    1.5%
Lysine    2.2%
Methionine    0.5%
Vitamins and trace elements    1.5%
Growth promoter and mixing medium    0.2%

EXAMPLE 3

A feedstuff suitable for feeding to pigs more than three to five days after weaning was made as described generally in Examples 1 and 2 from the following components.

Small flakes of cooked maize    17.1%
Small flakes of cooked wheat    17.1%
Milk pellets    17.1%
Protein pellets    44.2%
Sugar    2.5%
Soya bean oil    2.0%

The protein pellets contained the following ingredients.

Fish meal    20.0%
Cooked wheat powder    75.6%
Dicalcium phosphate    0.5%
Lysine    1.2%
Methionine    0.2%
Vitamins and trace elements    1.1%
Growth promoter and mixing medium    0.2%
Calcium carbonate (limestone flour)    1.2%

## Claims

1. A feedstuff for pigs under the age of five weeks which comprises cereal, milk solids and animal protein, characterized in that at least part of the cereal is present in the form of rolled flakes of cooked cereal having flake size 1.5 mm to 5 mm with flakes of size greater than 7 mm substantially absent, the cereal being wheat, maize, oats, barley or soya beans, and that such flakes form 20% to 80% of the dry weight of the feedstuff.

2. A feedstuff as claimed in claim 1 in which the flake size of the cereal is 2 mm to 3 mm.

3. A feedstuff as claimed in claim 1 or claim 2 in which the milk solids and animal protein are present as separate pellets of each.

4. A feedstuff as claimed in claim 3 in which the pellets containing animal protein and/or the pellets containing milk solids also contain up to 75% by weight of the pellet of powdered cooked cereal.

5. A method of feeding pigs under the age of five weeks with a feedstuff comprising cereal, milk solids and animal protein, characterized in that at least part of the cereal is present in the form of rolled flakes of cooked cereal having flake size 1.5 mm to 5 mm with flakes of size greater than 7 mm substantially absent, the cereal being wheat, maize, oats, barley or soya beans, and that such flakes form 20% to 80% of the dry weight of the feedstuff.

6. A method according to claim 5 in which the amount of milk in the feedstuff is reduced, and the amount of cereal increased, after the first three to five days from weaning.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | ANIMAL PRODUCTION, vol. 30, no. 1, 1980, pages 85-93; K.J. McCRACKEN et al.: "Effect of flaked maize in diets for early-weaned pigs on performance to 6 weeks of age" * Page 85, Abstract; page 86-88, tables 1-3; page 89, lines 10-16 * | 1,3,5 | A 23 K  1/18 A 23 K  1/14 |
| X,Y | ANNALES DE ZOOTECHNIE, vol. 25, no. 1, 1976, pages 41-51; A. AUMAITRE: "Evaluation de divers traitements technologiques des céréales. IV. - Influence du floconnage et de l'expansion de l'orge et du mais sur les performances du porcelet sevré a 21 jours: effets sur la digestibilité des éléments de la raion" * Page 41, "Summary"; page 43, table 1; page 44, table 2; page 46, table 4 * | 1,5 | |
| Y | PATENT ABSTRACTS OF JAPAN, vol. 8, no. 187 (C-240)[1624], 28th August 1984; & JP-A-59 82 074 (MICHIYOSHI ISHIBASHI) 11-05-1984 * Abstract * | 1,2 | TECHNICAL FIELDS SEARCHED (Int. Cl.4) A 23 K |
| A | CHEMICAL ABSTRACTS, vol. 104, no. 17, April 1986, page 574, abstract no. 147504s, Columbus, Ohio, US; & HU-A-36 365 (MONORI ALLAMI GAZDASAG) 30-09-1985 * Abstract * | 1,5 | |

-/-

The present search report has been drawn up for all claims

| Place of search | Date of completion of the search | Examiner |
|---|---|---|
| THE HAGUE | 31-05-1988 | DEKEIREL M.J. |

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | COMMONWEALTH AGRICULTURAL BUREAU, abstract no. 861477362, ON056-00808, Nutrition Abs and Rev/Ser B; Kalinin, V.V. et al.: "Variously processed barley in starter mixtures" & ZHIVOTNOVODSTVO, no. 4, 1985, pages 60-62 * Abstract * | 1,5 | |
| A | US-A-3 868 467 (ELDRED OLSON) * Column 3, lines 19-28; column 4, lines 43-55; table 1 * | 1,5 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 31-05-1988 | DEKEIREL M.J. |